# EUROPÄISCHE PATENTSCHRIFT

(11) **EP 2 008 875 B1**
(45) Veröffentlichungstag und Bekanntmachung des Hinweises auf die Patenterteilung: **26.08.2009**
(21) Anmeldenummer: 07290830.4
(22) Anmeldetag: 29.06.2007
(51) Int. Cl.: B60R 16/02, H02G 3/22

(54) **Durchführung für eine elektrische Leitung**
Feedthrough for an electric cable
Réalisation pour une conduite électrique

(43) Veröffentlichungstag der Anmeldung: 31.12.2008
(73) Patentinhaber: Nexans, 75008 Paris (FR)
(72) Erfinder: Bock, Norbert, 95478 Kemnath (DE); Völkl, Dietmar, 95703 Plössberg (DE); Lang, Rainer, 92697 Georgenberg (DE)
(74) Vertreter: Döring, Roger

(56) Entgegenhaltungen:
- EP-A- 1 403 991
- WO-A-01/57981
- DE-A1-102005 025 780
- DE-A1-102006 006 577
- US-A1- 2003 084 538
- US-A1- 2004 069 521

## Beschreibung

Die Erfindung bezieht sich auf eine Durchführung für eine elektrische Leitung gemäß dem Oberbegriff des Patentanspruchs 1. Eine solche Durchführung geht aus der DE 10 2005 025 780 A1 hervor.

Derartige Durchführungen werden prinzipiell für alle elektrischen Geräte benötigt, die mittels einer elektrischen Leitung an eine Spannungs- und Signalquelle anschließbar sind. Das gilt auch für Geräte und Einheiten in Fahrzeugen, wie PKWs und LKWs. Solche Geräte sind beispielsweise mit Sensoren ausgerüstete Aggregate, wie Getriebe, Bremseinrichtungen, Tankbehälter, Scheinwerfer und andere mit Glühlampen bestückte Bauteile. Insbesondere in der Fahrzeugtechnik ist eine feuchtigkeitsdichte aber auch sichere Einführung einer Leitung in das Gehäuse des jeweiligen Geräts erforderlich.

Durchführungen, wie sie eingangs beschrieben sind, gehören seit langem zum Stand der Technik. Zur feuchtigkeitsdichten Abdeckung des Lochs im Gehäuse wird in der Regel ein O-Ring verwendet, der auf dem Stutzen des Adapters angebracht ist. Die Leitung wird im Adapter mit beliebigen Dichtelementen abgedichtet, die gleichzeitig für einen festen Sitz der Leitung im Adapter sorgen sollen. Eine auf Dauer zugentlastete Festlegung der Leitung im Adapter ist auf diese Weise nicht erreichbar, insbesondere nicht in Fahrzeugen, weil die Dichtelemente beim Betrieb derselben durch Temperaturschwankungen und Erschütterungen gelockert werden.

Die eingangs erwähnte DE 10 2005 025 780 A1 beschreibt eine Durchführung mit einem Abdichtelement, mit welcher ein strangförmiger Körper, bei dem es sich beispielsweise um einen Kabelsatz handelt, im Durchbruch einer Wand abgedichtet ist. Die Durchführung besteht aus einem den langgestreckten Körper umschließenden Bauteil mit einer Tülle und einer Führung sowie einer Umfangswand die mittels eines Spannelements so vorgespannt werden kann, daß sie dicht gegen den Durchbruch gedrückt wird. Der Kabelsatz ist mit einer Umfüllung versehen, die Teil der Durchführung ist. Gesonderte Maßnahmen zur zugentlasteten Festlegung des Kabelsatzes sind nicht vorgesehen.

Der Erfindung liegt die Aufgabe zugrunde, die eingangs geschilderte Durchführung so zu gestalten, daß neben einer Abdichtung der Leitung gegenüber Feuchtigkeit auch eine auf Dauer wirksame Zugentlastung derselben sichergestellt ist.

Diese Aufgabe wird gemäß den kennzeichnenden Merkmalen des Patentanspruchs 1 gelöst.

Durch die Erweiterung und den mit derselben zu verrastenden Klemmkörper ist die Leitung in dem Adapter, unabhängig von einer Abdichtung gegenüber Feuchtigkeit, so festgelegt, daß sie ihre Position auch bei größeren Zugbelastungen stabil beibehält. Die Erweiterung ist Teil des Adapters, dessen Baugröße durch dieselbe nicht wesentlich vergrößert wird. Die zugentlastete Festlegung der Leitung ist durch den mit Vorsprüngen ausgerüsteten Klemmkörper besonders einfach, weil derselbe nur auf die Erweiterung gesteckt werden muß, bis er mit derselben verrastet ist. In dieser Endposition des Klemmkörpers ist die Leitung dann durch die Vorsprünge in der Erweiterung unverrückbar festgeklemmt. Eine so gewonnene Zugentlastung ist von Temperaturschwankungen und Erschütterungen unabhängig und daher auf Dauer wirksam. Erweiterung und Klemmkörper mit Vorsprüngen bieten noch den weiteren Vorteil, daß die zugentlastete Festlegung der Leitung leicht aufgehoben werden kann, beispielsweise für Reparaturzwecke, oder wenn die Leitung durch eine andere ersetzt werden soll. Die wirksame Zugentlastung der Leitung im Adapter ist auch dann gegeben, wenn Leitungen mit unterschiedlichen Durchmessern eingesetzt werden.

Ausführungsbeispiele des Erfindungsgegenstandes sind in den Zeichnungen dargestellt.

Es zeigen:
Fig. 1 in schematischer Darstellung eine Durchführung durch die Wandung eines elektrischen Geräts.
Fig. 2 eine Explosionszeichnung der in der Durchführung verwendeten Teile.
Fig. 3 und 4 zwei unterschiedliche Ausführungsformen eines in der Durchführung verwendbaren Adapters in vergrößerter Darstellung.

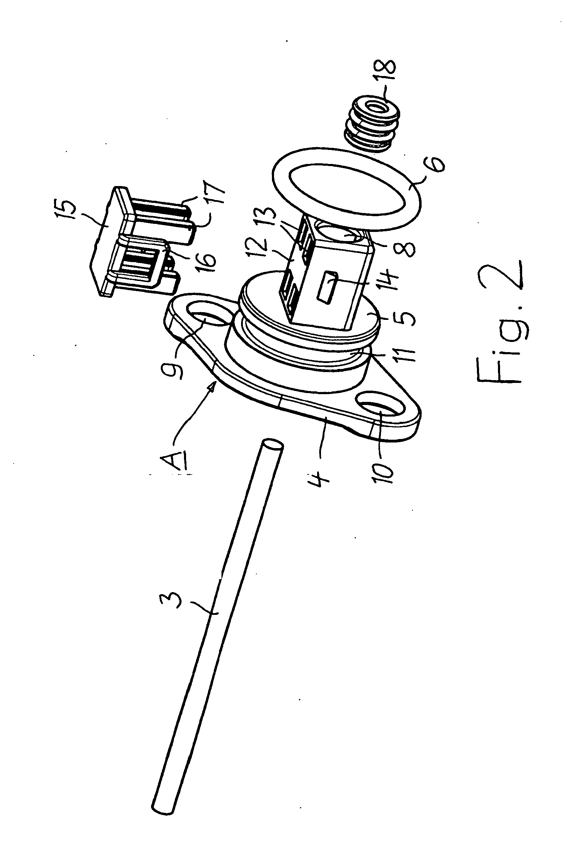

In einer nur als Ausschnitt angedeuteten Wandung 1 eines elektrischen Geräts in ein Loch 2 angebracht, durch welches eine elektrische Leitung 3 feuchtigkeitsdicht und zugentlastet hindurchgeführt ist. Für diese Durchführung ist ein aus Kunststoff, beispielsweise Polyamid, bestehender Adapter A in das Loch 2 eingesetzt, der einen Flansch 4 und einen Stutzen 5 aufweist. Der Flansch 4 ist beispielsweise an strichpunktiert angedeuteten Stellen mit der Wandung 1 in einer Position verschraubt, in welcher der Stutzen 5 durch das Loch 2 hindurchragt. Er ist gegenüber der Wandung 1 durch ein Dichtelement 6 feuchtigkeitsdicht abgedichtet, bei dem es sich beispielsweise um einen O-Ring handelt. An der in das Gerät hineinragenden Stirnfläche des Stutzen 5 ist eine Erweiterung 7 angebracht, deren genauerer Aufbau aus den Fig. 2 bis 4 hervorgeht. Der Adapter A hat eine Bohrung 8 zum Durchführen der Leitung 3, die sich auch durch die Erweiterung 7 erstreckt.

Gemäß Fig. 2 hat der Adapter A in seinem Flansch 4 für seine Befestigung an der Wandung 1 zwei Löcher 9 und 10 zum Einsetzen von Schrauben. Der Stutzen 5 hat an seiner Umfangsfläche eine umlaufende Nut 11 zur Aufnahme des als O-Ring ausgeführten Dichtelements 6. Die Erweiterung 7 ist im dargestellten Ausführungsbeispiel rechteckig, mit vier ebenen Außenflächen ausgeführt. Es soll mindestens eine ebene Außenfläche 12 vorhanden sein.

In der Außenfläche 12 der Erweiterung 7 sind bei dem in Fig. 2 dargestellten Ausführungsbeispiel vier Durchbrechungen 13 angebracht, die von der Außenfläche 12 bis in die Bohrung 8 ragen. Es sollen mindestens zwei Durchbrechungen 13 vorhanden sein. Außen sind an der Erweiterung 7 auf zwei einander gegenüberliegenden Seiten Rasthaken 14 vorgesehen, von denen in Fig. 2 nur einer zu sehen ist.

Die Erweiterung 7 ist eines von zwei für die Zugentlastung der Leitung 3 benötigten Teilen. Das andere Teil ist ein Klemmkörper 15, der mit der Erweiterung 7 verrastet werden kann. Dazu ist er auf zwei einander gegenüberliegenden Seiten mit Rastbügeln 16 ausgerüstet, die in Montageposition um die Rasthaken 14 der Erweiterung 7 herumgreifen. In Fig. 2 ist nur ein Rastbügel 16 zu sehen.

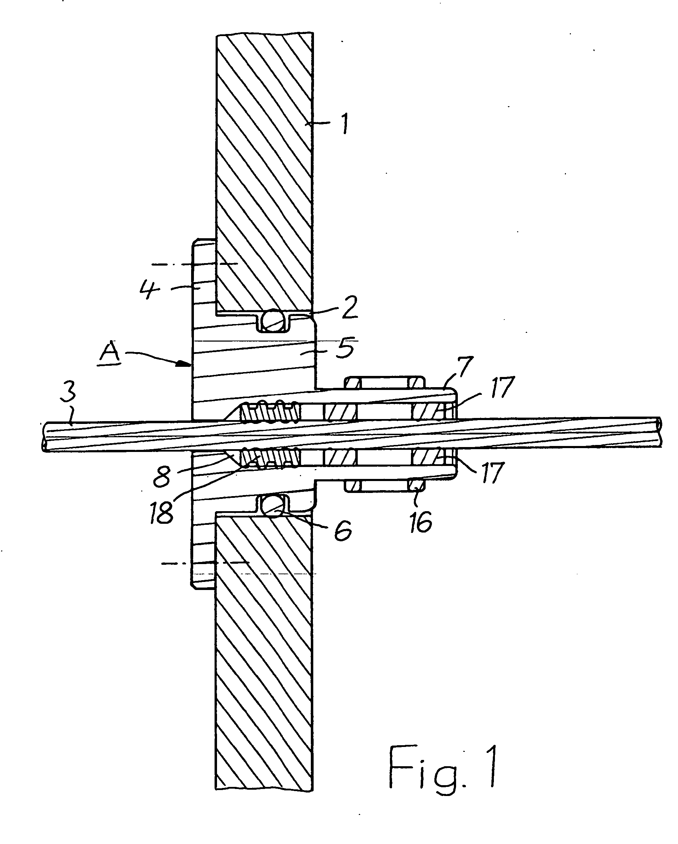

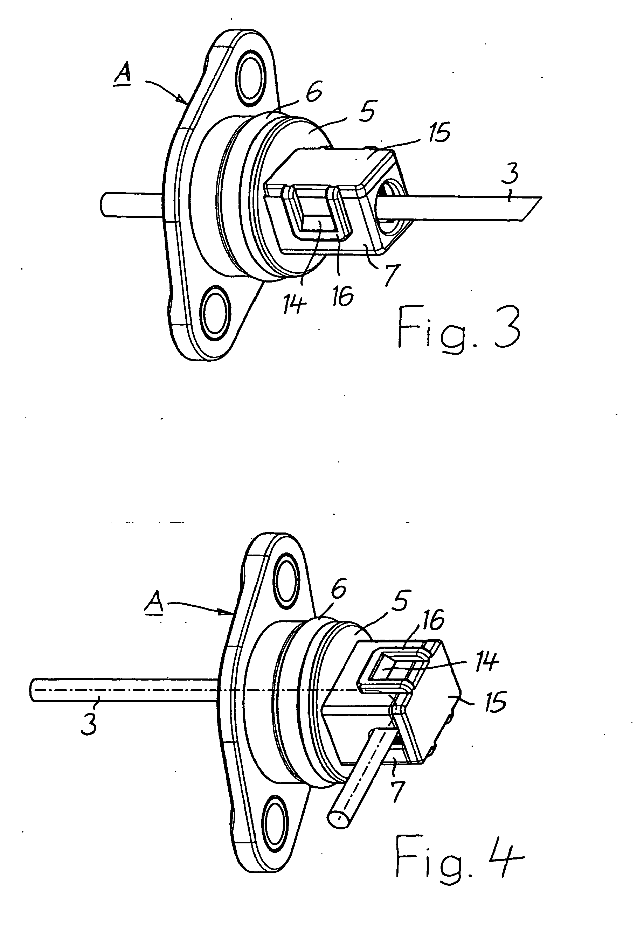

Am Klemmkörper 16 sind - analog zu den vier Durchbrechungen 13 der Erweiterung 7 - vier Vorsprünge 17 angebracht, die in Montageposition in die Durchbrechungen 13 der Erweiterung 7 eingreifen. Sie liegen - so wie es in Fig. 1 dargestellt ist - in dieser Montageposition paarweise an zwei einander gegenüberliegenden Seiten der in der Bohrung 8 befindlichen Leitung 3 an und verklemmen dieselbe innerhalb der Erweiterung 7. Wenn nur zwei Vorsprünge 17 am Klemmkörper 15 und dazu passend zwei Durchbrechungen 13 in der Erweiterung 7 vorgesehen sind, dann soll die Anordnung mit Vorteil so getroffen sein, daß die beiden Vorsprünge 17 in Montageposition an zwei unterschiedlichen Seiten der Leitung 3 anliegen. Ein aus Fig. 2 auch ersichtlicher Dichtkörper 18 wird vor dem Aufsetzen des Klemmkörpers 15 auf die Erweiterung 7 auf die Leitung 3 aufgeschoben, bis er in der Bohrung 8 liegt (Fig. 1). Ein zusammengebauter Adapter A geht aus Fig. 3 hervor.

Bei der Ausführungsform des Adapters A nach den Fig. 2 und 3 liegt die Erweiterung 7 derart in der Verlängerung des Stutzens 5, daß die Leitung 3 geradlinig durch die Bohrung 8 hindurchgeführt werden kann. Gemäß Fig. 4 kann die Erweiterung 7 aber auch mit einer um 90° abgeknickten Bohrung 8 ausgerüstet sein. Die Leitung 3 verläßt dann den Adapter A innerhalb des Geräts gegenüber dem in das Gerät bzw. den Adapter A eingeführten Teil derselben mit um 90° gebogenen Verlauf. Der sonstige Aufbau des Adapters A und der aus Erweiterung 7 und Klemmkörper 15 bestehenden Zugentlastung bleiben gegenüber dem für die Fig. 2 und 3 geschilderten Aufbau im wesentlichen unverändert.

## Patentansprüche

1. Durchführung für eine elektrische Leitung (3) durch ein Loch (2) in einer Wandung (1) eines elektrischen Geräts, bestehend aus einem Adapter (A) aus Isoliermaterial, der an der Wandung (1) festlegbar ist und einen in Montageposition in das Loch (2) eingreifenden und feuchtigkeitsdicht durch dasselbe hindurchragenden Stutzen (5) sowie eine Bohrung (8) zum Durchführen der Leitung (1) hat, bei welcher der Stutzen (5) an einer in Montageposition in das Innere des Gehäuses weisenden Stirnseite eine Erweiterung (7) mit mindestens einer ebenen Außenfläche (12) aufweist, **dadurch gekennzeichnet,**
- **daß** in der Erweiterung (7) mindestens zwei Durchbrechungen (13) angebracht sind, die von der Außenfläche (12) bis in die Bohrung (8) reichen und
- **daß** ein mit der Erweiterung (7) zu verrastender, mindestens zwei Vorsprünge (17) aufweisender Klemmkörper (15) vorhanden ist, dessen Vorsprünge (17) in Montageposition bis zur klemmenden Anlage an der Leitung (3) in die Durchbrechungen (13) eingreifen.

2. Durchführung nach Anspruch 1, **dadurch gekennzeichnet, daß** die Durchbrechungen (13) in der Erweiterung (7) so angeordnet sind, daß in Montageposition auf zwei einander liegenden Seiten der Leitung (3) jeweils zumindest ein Vorsprung (17) des Klemmkörpers (15) anliegt.

3. Durchführung nach Anspruch 1 oder 2, **dadurch gekennzeichnet, daß** in der Bohrung (8) des Adapters (A) zum feuchtigkeitsdichten Verschließen derselben ein die Leitung (3) umgebender Dichtkörper (18) angebracht ist.

4. Durchführung nach einem der Ansprüche 1 bis 3, **dadurch gekennzeichnet, daß** die Bohrung (8) sich geradlinig durch Stutzen (5) und Erweiterung (7) des Adapters (A) erstreckt.

5. Durchführung nach einem der Ansprüche 1 bis 3, **dadurch gekennzeichnet, daß** die Bohrung (8) in der Erweiterung (7) gegenüber ihrer Achsrichtung im Stutzen (5) um 90° gebogen verläuft.

## Claims

1. Bushing for an electrical line (3) for a hole (2) in a wall (1) of an electrical device, comprising an adapter (A) composed of insulating material, which adapter can be fixed to the wall (1) and has a connection piece (5), which in a mounted position engages in the hole (2) and projects through the said hole in a moisture-tight manner, and a bore (8) for leading through the line (1), in which bushing the connection piece (5) has, on an end face which points into the interior of the housing in the mounted position, an extension (7) with at least one flat outer surface (12), **characterized in**
- **that** at least two apertures (13) which extend from the outer surface (12) into the bore (8) are made in the extension (7), and
- **that** a clamping body (15) which is to be latched to the extension (7) and has at least two projections (17) is provided, the projections (17) of the said clamping body engaging, in the mounted position, into the apertures (13) to the point of clamping abutment against the line (3).

2. Bushing according to Claim 1, **characterized in that** the apertures (13) in the extension (7) are arranged such that, in the mounted position, at least one projection (17) of the clamping body (15) rests on two opposite sides of the line (3) in each case.

3. Bushing according to Claim 1 or 2, **characterized in that** a sealing body (18) which surrounds the line (3) is fitted in the bore (8) in the adapter (A) in order to close the said bore in a moisture-tight manner.

4. Bushing according to one of Claims 1 to 3, **characterized in that** the bore (8) extends in a rectilinear manner through the connection piece (5) and the extension (7) of the adapter (A).

5. Bushing according to one of Claims 1 to 3, **characterized in that** the bore (8) enters the extension (7) in a manner in which it is bent through 90° in relation to its axial direction in the connection piece (5).

## Revendications

1. Passage pour une conduite électrique (3) à travers un trou (2) dans une paroi (1) d'un appareil électrique, constitué d'un adaptateur (A) en matériau isolant, qui peut être fixé à la paroi (1) et qui présente une tubulure (5) venant en prise dans le trou (2) dans la position de montage et traversant ce trou de manière étanche à l'humidité, ainsi qu'un alésage (8) pour le passage de la conduite (3), la tubulure (5) présentant, sur un côté frontal tourné vers l'intérieur du boîtier dans la position de montage, un élargissement (7) avec au moins une surface extérieure plane (12), **caractérisé en ce que**
- dans l'élargissement (7) sont pratiqués au moins deux orifices (13) qui s'étendent depuis la surface extérieure (12) jusque dans l'alésage (8), et
- **en ce qu'**un corps de serrage (15) à encliqueter avec l'élargissement (7) et présentant au moins deux saillies (17) est prévu, ses saillies (17) venant en prise dans les orifices (13) dans la position de montage jusqu'à venir en butée de serrage contre la conduite (3).

2. Passage selon la revendication 1, **caractérisé en ce que** les orifices (13) sont disposés dans l'élargissement (7) de telle sorte qu'au moins une saillie (17) du corps de serrage (15) s'applique à chaque fois dans la position de montage, sur deux côtés de la conduite (3) situés l'un contre l'autre.

3. Passage selon la revendication 1 ou 2, **caractérisé en ce que** dans l'alésage (8) de l'adaptateur (A) est monté un corps d'étanchéité (18) entourant la conduite (3) en vue de fermer l'alésage de manière étanche à l'humidité.

4. Passage selon l'une quelconque des revendications 1 à 3, **caractérisé en ce que** l'alésage (8) s'étend en ligne droite à travers la tubulure (5) et l'élargissement (7) de l'adaptateur (A).

5. Passage selon l'une quelconque des revendications 1 à 3, **caractérisé en ce que** l'alésage (8) s'étend dans l'élargissement (7) avec un coude de 90° par rapport à sa direction axiale dans la tubulure (5).
